# EUROPEAN PATENT APPLICATION

(11) **EP 1 920 866 A1**
(43) Date of publication of application: **14.05.2008**
(21) Application number: 06743411.8
(22) Date of filing: 23.03.2006
(51) Int. Cl.: B23K 9/00, B23K 9/095, H05H 1/36, H05B 7/11

(54) **DUAL-CONDUCTOR WELDING GUN**

(30) Priority: 31.08.2005 ES 200502128
(71) Applicant: Hispamig, S.L., 46138 Rafelbuñol (ES)
(72) Inventor: MORENO GOZALBO, José Carlos, E-46138 Rafelbuñol (ES)
(74) Representative: Pereira Toña, Maria Irache
(86) International application number: PCT/ES2006/000143
(87) International publication number: WO 2007/026033

(57) **Abstract**

Welding gun with double conductor composed by a torch body (1) and electronic scales (2) to measure the intensity of the sensors (6) located in each conductor (3) and with mechanisms to trigger an alarm when there is an imbalance of the intensities circulating through both conductors. To this end, a microcontroller (5) connected to intensity (6) and temperature (8) sensors in the conductors is used, with indicators of failure or anomaly. The microcontroller (5) program calculates the difference between the magnitudes of both intensity signals and determines which of the two is higher, and, based on predefined parameters, triggers the corresponding alarm signal.

## Description

### Purpose of the invention

The present welding gun with double conductor consists of a specific industrial electric peg for its connection to an electrical energy converter, a bundle of conductors inside an insulated hose, and a welding gun (also called "torch") whose tip is used for welding, everything arrayed in such a way that an alarm letting the process control system know if the conductors have failed can be triggered.

Its application field is the industry aimed at industrial welding.

### Background of the invention

Nowadays, both in manual and automated industrial welding, failure of the intensity conductor causes production losses, and when such failure occurs during periods with no human monitoring, the welding process stops at that point until the problem is solved, which generates production chain position adjustment costs. Failure can be due to different causes such as degradation by corrosion of the conductive material, breaking by mechanical wear, or overheating.

### Description of the invention

This gun or torch is designed to be connected to a direct current power supply system with a voltage between 10 and 40 Volts and an intensity between 1 and 400 Amperes, with a maximum allowed intensity of 500 A.

The author of the present invention proposes a solution to the problem previously described by using two conductors. The failure of one of the conductors will trigger an alarm that can be used to voluntarily stop the process and/or continue with it under similar working conditions, since each conductor is capable to withstand on its own the current intensity needed for normal operating conditions.

Both conductors originate at the same contact in the peg, run in parallel through separate conducts that can be cooled or not, and, when reaching the gun (torch), they meet again to provide full intensity at the welding tip. The advantage of this solution is that, if the same amount of copper is used and the conductor is divided in two equal parts, the total surface in contact with the cooling fluid, preferably water, is increased in a factor equal to the square root of two.

This advantage can be exploited in two ways. One possibility is to keep the original copper mass and reduce the demands imposed on the cooling system of the cables so that there is a saving in this subsystem.

The second possible way of exploiting this advantage is keeping the cooling system of the cables and reducing the copper mass by half to achieve the same contact surface with water and save copper. The correct operation of the torch depends on the correct balance of the intensities flowing through the two conductors, since the capacity of each conductor will be limited to half the total intensity.

If one of the conductors failed, the second conductor would be overcharged with an intensity greater than half the total intensity, which would cause overheating and would ultimately lead to failure of this conductor as well. To avoid such a failure, a mechanism is available to trigger an alarm to let the welding process control system know that an intensity imbalance has occurred in the conductors.

The process control system can stop the process and/or warn the operator about the system failure that needs repairing, but it is not necessary to stop the welding process.

### Description of the drawings

As a complement to this description, and in order to help achieve a better understanding of the characteristics of this invention, the present descriptive report is accompanied by a figure representing the invention, but of no limiting nature. The following are included:

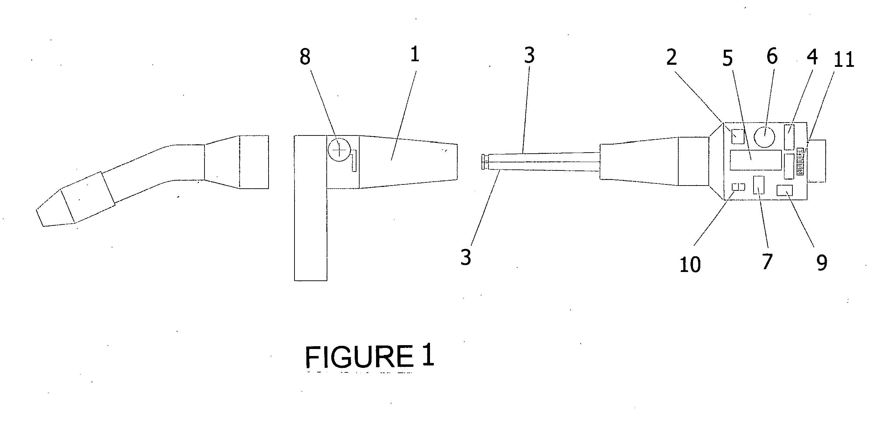

Figure 1.- Schematic representation of a practical model of the gun described by the present invention with the advocated media and security devices.

### Preferred design of the invention

As shown in the figures attached, there is a gun/torch body (1) for welding that has electronic scales (2) to measure the intensity at each conductor (3) and trigger an alarm when a charge imbalance occurs. To achieve this goal, a microcontroller (5) is connected to intensity Hall Effect sensors (6) that measure the intensity in each conductor with no need of establishing galvanic contact with them.

The microcontroller (5) is programmed to calculate mean individual intensities and the absolute value of their difference. The alarm would be triggered if the absolute value of the difference surpasses a preset given threshold.

The operating conditions for the electronic system are very stringent, since a microcontroller (5) is adjacent to conductors (3) through which intensities of up to 500 Amperes are expected to run. The system shall therefore incorporate all relevant measures to shield it against the effects of these intensities.

Electronic scales (2) have been designed to measure the intensities in two conductors (3).

The scales (2) have two devices (6) capable of measuring the intensity flowing through the two conductors (3) of the torch (1). The signals of the intensity meters receive a treatment that is suitable for the needs of the process. The treatment has two clearly defined stages.

The first stage consists of an active filter that allows the passage of frequencies below 5 Hz by means of a fourth-order Bessel filter to remove all high-frequency electrical noise superimposed to the signal. In addition to this, the filter produces the mean value of the pulsating current, which is a usual technique in welding applications.

The second stage of the treatment consists of an active rectifier whose function is to represent at its exit point a positive polarity signal of the same magnitude as the signal at the entrance point, be this latter positive or negative. This is required by the following stage, since it only allows positive polarity signals. This active rectifier allows correctly measuring the intensity regardless of the direction of the conductors (3) in the scales (2). This is a very important aspect, since there is no incorrect position when mounting the conductors during fabrication.

The properly treated signal enters a microcontroller (5) that has circuits that turn the analogical signal into a numerical or digital signal. The microcontroller (5) program calculates the difference between the magnitudes of both intensity signals and determines which of the two magnitudes is the highest.

Then the quotient of this difference divided by the greater of the two magnitudes is obtained. If the quotient is above a certain value, for example 25%, an alarm signal is produced, which in turn triggers the intensity alarm by any known method. A LED pilot light (7) corresponding to the conductor with a decreased intensity would also be lit.

The microcontroller (5) can be connected to a temperature sensor (8) that detects if overheating of the welding torch (1) handle occurs. The microcontroller has been programmed to measure the signal coming from the temperature sensor (8) and operate as a thermostat. If the programmed temperature threshold is exceeded, an alarm signal would be triggered to activate the temperature alarm relay. A LED pilot light (9) corresponding to the welding torch handle overheating alarm would also be lit.

The torch (1) can have a cooling system (11) with entry and exit points of cooling fluid, preferably water, for a better resistance of the temperatures reached inside the device.

Application and operation are very simple: the gun (1) is connected to the welding machine and to the direct current power supply (10) so that electricity circulates through the conductors (3) at the corresponding intensity thanks to the action of the transformers (4) that adjust the input current to operation current. In this situation, the microcontroller (5) with the scales (2) by means of an intensity meter (6) measures the intensity circulating through the two conductors. If the quotient between the absolute difference of both measurements and the greatest intensity is above a predefined value, the microcontroller (5) emits a light and/or a sound to indicate that there is an anomaly in the conductors (3).

If the microcontroller (5) does not detect any irregularities in the intensities, a temperature meter (8) controls the conductor at the same time. If this measurement is above a certain predefined value, the microcontroller (5) will, through the necessary mechanisms and in a similar fashion, emit a light and/or a sound to alert about the anomaly.

Depending on the program inserted in the microcontroller (5), once the failures described above have occurred, it will have the ability of disconnecting the power supply to the conductors (3) of the torch (1), or modifying operation conditions.

If none of these situations occurs, the power supply (10) feeds the conductors (3), dividing the current in two so that half of the current circulates through each conductor. Thus, at the end of the run both conductors come together again, their intensities are added, and the operation power required for welding jobs is reached at the tip of the torch.

With this perfected welding torch, the operation intensity of each conductor (3) is only half of the current intensity required at the tip of the device, so if the electronic scales (2) detect an imbalance in this current or if the temperature of either conductor is above the normal range, the torch produces a visible warning. All of this in accordance to preset parameters programmed in the microcontroller (5).

After thoroughly describing the nature of the present invention and its practical application, all that is left to add is that its shape, materials and manufacture can be modified if such modifications do not substantially affect the characteristics claimed in the following section.

## Claims

1. Welding gun with double conductor, as the ones used connected to a welding machine and fed by a direct electrical current, composed by a torch body (1) with electronic scales (2) to measure intensity, the sensors (6) of each conductor (3) and mechanisms to trigger an alarm when there is an imbalance between these charges. To this end, a microcontroller (5) connected to said intensity (6) and temperature (8) sensors of the conductors is used, with indicators of failure or warning, where the data treatment at the microcontroller (5) converts the analogical signal into a numerical or digital representation. The microcontroller (5) program calculates the difference between the magnitudes of both intensity signals and determines which of the two is higher by means of two clearly differentiated stages. The torch can be cooled by a cooling system (11) and the body of the gun hosts the corresponding transformers (4) for the suitable treatment of the incoming direct current.

2. Welding gun with double conductor, as described in the first claim above, with a first stage consisting of an active filter that allows the passage of frequencies below 5 Hz by means of a fourth-order Bessel filter, which in turn generates the mean value of the pulsating current.

3. Welding gun with double conductor, as described in the first claim above, with a second stage of the treatment consisting of an active rectifier whose function is to represent at its exit point a positive polarity signal of the same magnitude as the signal at the entrance point, be this latter positive or negative.

4. Welding gun with double conductor, as described in the first claim above, with the characteristic that, depending on the value obtained by the microcontroller (5) for the quotient of the difference between both measured intensities and the greatest of both magnitudes, if such quotient surpassed a certain predefined value, the device would trigger the corresponding alarm signal.

5. Welding gun with double conductor, as described in the first claim above, with the characteristic that the microcontroller (5) activates the alarm media (9) when the temperature measured by the corresponding sensor (8) is higher than a predefined value.
